# FASCICULE DE BREVET EUROPEEN

(11) **EP 2 760 743 B1**
(45) Date de publication et mention de la délivrance du brevet: **09.09.2015**
(21) Numéro de dépôt: 12775793.8
(22) Date de dépôt: 28.09.2012
(51) Int. Cl.: B64D 43/00, B60R 11/02, B64C 1/14, G08G 5/00, B60J 3/00, B64D 45/00, B64D 11/06

(54) **COCKPIT D'AÉRONEF, ET NOTAMMENT PARTIE AVANT D'UN COCKPIT D'AÉRONEF**
FLUGZEUGCOCKPIT, INSBESONDERE FRONTTEIL EINES FLUGZEUGCOCKPITS
AIRCRAFT COCKPIT, IN PARTICULAR THE FRONT PORTION OF AN AIRCRAFT COCKPIT

(30) Priorité: 30.09.2011 FR 1158805
(43) Date de publication de la demande: 06.08.2014
(73) Titulaire: Airbus Operations, 31060 Toulouse (FR)
(72) Inventeur: GUERING, Bernard, F-31850 Montrabe (FR); DEPEIGE, Alain, F-31170 Tournefeuille (FR)
(74) Mandataire: Santarelli
(86) Numéro de dépôt international: PCT/FR2012/052209
(87) Numéro de publication internationale: WO 2013/045861

(56) Documents cités:
- EP-A2- 2 189 371
- WO-A1-95/08474
- WO-A1-2006/101417
- WO-A2-2007/005658
- FR-A1- 2 900 634
- JP-A- 2 256 596
- JP-A- 2006 100 419
- US-A- 3 314 178
- US-A- 4 664 475
- US-A- 5 222 690
- US-A1- 2006 108 873
- US-A1- 2008 295 301
- US-B1- 6 597 294

## Description

La présente invention concerne un cockpit d'aéronef et plus particulièrement l'aménagement d'une planche de bord à l'intérieur d'un tel cockpit.

L'invention est dans le domaine des aéronefs commerciaux pour le transport de passagers et/ou de fret. Un cockpit d'un tel aéronef est le plus souvent disposé à la pointe avant de l'aéronef et accueille un poste de pilotage dans lequel prend place un pilote, éventuellement un copilote et/ou un membre d'équipage tel par exemple un instructeur. Le pilote et/ou le copilote dispose à l'intérieur du cockpit d'un ensemble complet d'écrans de visualisation et de moyens de commande qui est appelé planche de bord dans le présent document.

Dans les aéronefs, le nombre d'écrans d'affichage, ou tout du moins la surface d'affichage, a tendance à augmenter ce qui conduit naturellement à un accroissement de la taille des planches de bord. Les planches de bord ont ainsi tendance à devenir de plus en plus larges ce qui conduit à un cockpit plus large. Cette largeur croissante au niveau du cockpit est pénalisante lors de la définition de la forme aérodynamique extérieure de la pointe avant de l'aéronef.

On trouve sur une planche de bord d'aéronef des appareils de standards et de tailles différents qui sont intégrés à la planche de bord si bien que la structure chargée d'intégrer ces divers matériels est complexe et donc d'un prix de revient élevé. L'ensemble des divers matériels est volumineux et lourd, sensible aux vibrations et délicat à installer et à inspecter. Le document WO 95/08474 divulgue un cockpit d'aéronef présentant les caractéristiques du préambule de la revendication 1.

Le présent document a alors pour but de proposer un environnement de travail pour le pilote et éventuellement son copilote plus ergonomique et notamment un environnement mettant en oeuvre une structure simplifiée, présentant une meilleure accessibilité et une intégration améliorée des fonctions environnantes dans le poste de pilotage.

À cet effet, est proposé en premier lieu un dispositif de visualisation pour cockpit d'aéronef comportant un écran et un support, caractérisé en ce que l'écran est monté pivotant sur son support, autour d'un premier axe sensiblement horizontal, et en ce que le support comporte des moyens permettant un réglage en hauteur de l'écran.

L'écran, qui est de préférence un écran plat (c'est-à-dire dont l'épaisseur est de l'ordre de quelques centimètres, par exemple inférieure à 10 cm et de préférence inférieure à 2 cm), peut alors être réglé à volonté par son utilisateur (pilote ou copilote) pour éviter tout problème de reflet et surtout pour s'adapter au mieux à la morphologie de l'utilisateur. Le fait de rendre l'écran mobile peut également permettre, si l'amplitude du déplacement est suffisante, de permettre un accès à l'arrière de l'écran (si l'on considère la face d'affichage comme étant la face avant de l'écran, par contre, en considérant le sens de déplacement de l'aéronef, en déplaçant l'écran on peut accéder à l'espace se trouvant à l'avant de l'écran) pour atteindre des connexions et éventuellement des dispositifs qui s'y trouvent.

Dans une forme de réalisation préférée, l'écran est un écran incurvé concave. Ainsi, d'une part, le confort de vision pour l'utilisateur est amélioré et, d'autre part, pour un encombrement similaire, la surface d'affichage peut être augmentée par rapport à un écran plat.

Une variante de réalisation de la présente invention prévoit que l'écran comprend un film mince souple à usage d'écran fixé sur un panneau rigide en matière composite.

Il est avantageusement prévu que l'écran présente un encadrement sur lequel sont disposés des boutons d'action. Cette caractéristique est particulièrement avantageuse lorsque l'écran est un écran tactile. En effet, dans ce cas, il est préférable d'avoir un écran à proximité de son utilisateur. On peut alors profiter de cette proximité pour prévoir des boutons d'action autour de l'écran, ces boutons étant alors disposés directement à portée de main de l'utilisateur.

Pour rendre l'écran mobile, il est proposé que le support comporte un deuxième axe fixe sensiblement horizontal et au moins un bras présentant une première extrémité montée pivotante sur le premier axe et une seconde extrémité portant le deuxième axe fixe. On entend ici par fixe que le deuxième axe est de préférence attaché à la structure du cockpit de sorte à être immobilisé ; la liaison peut toutefois être démontable si nécessaire. De préférence, le premier axe et le deuxième axe sont parallèles, de sorte que l'utilisateur (pilote ou copilote) peut facilement rapprocher l'écran de lui lorsque l'écran, dans une position totalement repliée, se situe en face de l'utilisateur. Toutefois, le premier axe et le deuxième axe peuvent, en variante, définir entre eux un angle, ce qui permet d'autres combinaisons de mouvement.

La présente invention concerne ainsi notamment un cockpit d'aéronef, caractérisé en ce qu'il comporte au moins un dispositif de visualisation tel que décrit plus haut. Un tel cockpit d'aéronef peut en outre comporter un premier siège destiné à recevoir un pilote, un second siège destiné à recevoir un copilote. On prévoit alors avantageusement qu'un seul écran est placé face au premier siège, que ledit écran est un écran d'un dispositif de visualisation tel que décrit plus haut, qu'un seul écran est placé face au second siège, et en ce que ledit unique écran est un écran d'un dispositif de visualisation tel que décrit plus haut.

La présente invention concerne en outre un cockpit d'aéronef selon la revendication 1 comportant un premier siège destiné à recevoir un pilote, un second siège destiné à recevoir un copilote, au moins un premier dispositif de visualisation comprenant un premier écran se trouvant face au premier siège, au moins un second dispositif de visualisation comprenant un second écran se trouvant face au second siège, et un pare-brise. Le dispositif de visualisation est de préférence un dispositif de visualisation tel que décrit ci-dessus mais il pourrait également s'agir d'un autre type de dispositif de visualisation.

L'invention prévoit ici que le cockpit comporte en outre un troisième dispositif de visualisation présentant un troisième écran, mobile, et un support permettant au troisième écran de se déplacer d'une première position dite déployée vers une position dite escamotée, que dans la position déployée le troisième écran se trouve au-dessus du premier écran et du second écran de manière à être visible à la fois par une personne assise sur le premier siège et par une personne assise sur le second siège et vient occulter une partie du pare-brise à la fois pour une personne assise sur le premier siège et pour une personne assise sur le second siège, et que dans la position escamotée le troisième écran est abaissé par rapport à sa position déployée de manière à rendre visible, au moins partiellement, la partie du pare-brise occultée dans la position déployée pour une personne assise sur le premier siège et pour une personne assise sur le second siège.

Il est proposé ici, de manière tout à fait originale, de disposer un écran devant le pare-brise de l'aéronef. La réglementation permet (même si elle ne le prévoit pas explicitement) de disposer un écran comme mentionné plus haut car il est prévu que le pilote (et le copilote) ait un angle mort de vision à travers le pare-brise au centre de celui-ci.

Dans un tel cockpit d'aéronef, le troisième écran dans sa position déployée est de préférence disposé en position centrale dans le cockpit, et dans sa position escamotée le troisième écran est par exemple disposé partiellement derrière le premier écran et partiellement derrière le second écran pour un observateur placé sur le premier siège ou sur le second siège.

Le troisième écran est par exemple mobile grâce à son montage sur des rails lui permettant de se translater entre sa position déployée et sa position escamotée. Pour permettre une meilleure visibilité et s'adapter aux pilotes, le troisième écran est avantageusement monté pivotant autour d'un axe sensiblement horizontal.

Un cockpit avec un troisième écran tel que décrit plus haut peut aussi comporter en outre un auvent recouvrant le premier dispositif de visualisation et le second dispositif de visualisation. On prévoit alors avantageusement que le troisième écran, dans sa position déployée se trouve au dessus de l'auvent, que le troisième écran dans sa position escamotée se trouve au dessous de l'auvent, et qu'une ouverture de passage est réalisée dans l'auvent pour permettre le passage du troisième écran lorsqu'il passe de sa position déployée à sa position escamotée ou inversement.

Pour les mêmes raisons que celles évoquées plus haut pour l'écran du dispositif de visualisation, le troisième écran est avantageusement concave.

La présente invention propose aussi un auvent de cockpit d'aéronef, caractérisé en ce qu'il comporte une partie centrale et deux parties latérales, et en ce que chaque partie latérale comporte, d'une part, une toile et, d'autre part, des moyens de tension pour maintenir ladite toile.

En effet, dans un cockpit équipé selon l'invention, l'ergonomie conférée par les dispositifs de visualisation permet de supprimer au moins une partie de l'équipement dit « auvent » comprenant des moyens de commande. Cet équipement est classiquement situé en hauteur de sorte à servir d'auvent aux écrans pour les protéger d'une luminosité qui empêcherait de voir ce qui est affiché sur les écrans. Un auvent selon l'invention permet aussi de protéger les dispositifs de visualisation d'une telle luminosité, en permettant un gain de poids et un encombrement réduit. Il est de préférence situé juste au-dessus du premier dispositif de visualisation (et du deuxième le cas échéant), et de sorte que le troisième écran défini précédemment, dans sa position déployée, se situe au-dessus de l'auvent.

Un tel auvent est très léger, facile à mettre en place et à démonter, d'un prix de revient très intéressant tout en remplissant parfaitement ses fonctions premières, à savoir d'éviter des reflets sur les écrans de visualisation et protéger le matériel électronique au-dessus duquel il se trouve.

Pour un tel auvent, la partie centrale peut être une partie rigide et servir partiellement de structure pour le maintien de chaque toile des parties latérales. La partie centrale, de même que les parties latérales, peut également être réalisée en toile tendue.

Les moyens de tension comportent par exemple un câble présentant une zone présentant un faible module d'élasticité et au moins zone déformable élastiquement avec un module d'élasticité sensiblement plus important. En d'autres termes, le câble comporte une partie qui ne s'allonge pas (ou très très peu) lors de la mise sous tension et une partie qui s'allonge, comme une sangle élastique, pour permettre de régler la tension du câble, maintenir celle-ci dans le temps et aussi permettre une déformation du câble en cas de choc sur celui-ci afin qu'il ne constitue pas un obstacle gênant dans le cockpit.

Pour faciliter le montage et le démontage de l'auvent, ses moyens de tension comportent par exemple une fermeture à glissière.

La présente invention concerne aussi un cockpit d'aéronef, caractérisé en ce qu'il comporte un auvent tel que décrit plus haut. Le démontage de l'auvent permet alors, par exemple, de rendre accessible un espace situé derrière les différents dispositifs de visualisation présents dans le cockpit, c'est-à-dire situé à l'avant du cockpit.

Il est aussi proposé ici un cockpit d'aéronef comportant une planche de bord intégrant au moins un écran de visualisation (qui est de préférence un écran d'un dispositif de visualisation tel que décrit plus haut mais qui peut aussi être d'un type différent), caractérisé en ce qu'un meuble avionique est disposé en avant de l'écran de visualisation. En outre, l'écran de visualisation est de préférence un écran plat.

Un meuble avionique est ici un meuble (armoire ou similaire) à l'intérieur duquel est logé du matériel électronique avionique. Cette disposition pour du matériel électronique avionique est tout à fait originale et également avantageuse. En effet, on utilise ici un espace rendu disponible par l'utilisation d'écrans plats (dont l'épaisseur est au plus de 10 cm) pour y disposer du matériel électronique avionique qui se trouve là en outre dans une zone sure.

Il est proposé dans une variante de réalisation qu'un support vienne porter le meuble avionique. Ce support peut être un support sensiblement plan. On prévoit alors par exemple qu'une carte électronique, dite carte-mère, s'étend sensiblement perpendiculairement au support et reçoit des cartes électroniques, dites cartes filles, qui s'étendent en étant perpendiculaires à la fois à la carte mère et au support. Dans ce cockpit d'aéronef, le support du meuble avionique est conformé de manière à pouvoir supporter un clavier de saisie, ou une tablette comme décrit par la suite. Le support du meuble avionique peut en outre comporter une face supérieure et une face inférieure, la face supérieure recevant ledit meuble avionique, et la face inférieure être conformée pour supporter au moins un palonnier. Avantageusement, le support est monté pivotant autour d'un axe fixe.

Enfin, la présente invention concerne un aéronef, caractérisé en ce qu'il comporte un cockpit tel l'une des formes de réalisation d'un cockpit décrites ci-dessus.

Des détails et avantages de la présente invention ressortiront mieux de la description qui suit, faite en référence aux dessins schématiques annexés sur lesquels :
La figure 1 est une vue de côté schématique d'un cockpit d'aéronef de l'art antérieur,
La figure 2 est une vue de côté schématique d'un cockpit d'aéronef selon un aspect de l'invention,
La figure 3 est une vue partielle en perspective de l'intérieur du cockpit de la figure 2 incluant en outre d'autres aspects de l'invention,
La figure 4 est une autre vue schématique de côté d'un cockpit d'aéronef selon la présente invention,
Les figures 5A à 5F sont des vues schématiques de côté montrant un pilote d'aéronef assis sur un siège face à un tableau de bord dans un cockpit selon la présente invention,
La figure 6 est une vue en perspective de la face arrière d'un dispositif de visualisation pour cockpit selon la présente invention,
La figure 7 illustre à échelle agrandie un dispositif de verrouillage pour le dispositif de visualisation illustré sur la figure 6,
Les figures 8A à 8C illustre un autre dispositif de visualisation pouvant prendre place dans un cockpit selon la présente invention dans trois positions distinctes,
La figure 9 est une vue en perspective à échelle agrandie et sous un autre angle de vue du dispositif de visualisation des figures 8A à 8C,
La figure 10 montre sous un autre angle et dans une autre position le dispositif de visualisation de la figure 9,
La figure 11 montre en vue de côté, dans deux positions distinctes, le dispositif de visualisation des figures 8 à 10,
La figure 12 est une vue schématique de dessus d'un cockpit d'aéronef selon l'invention,
La figure 13 illustre en perspective vue de dessus un auvent de tableau de bord d'un cockpit selon l'invention et une partie de son environnement,
La figure 14 montre uniquement un auvent de tableau de bord,
La figure 15 illustre schématiquement en vue de côté l'auvent de la figure 14 dans son environnement,
La figure 16 illustre le principe de montage de l'auvent des figures 13 à 15,
La figure 17 illustre schématiquement à échelle agrandie un détail de montage d'un auvent de tableau de bord,
La figure 18 illustre schématiquement des moyens de tension pour un auvent montré sur les figures 13 à 17,
La figure 19 montre un meuble avionique pouvant prendre place dans un cockpit d'aéronef selon la présente invention,
La figure 20 est une autre vue de côté schématique d'un pilote installé face à un tableau de bord dans un cockpit selon la présente invention, et
La figure 21 illustre schématiquement une baie avionique dans un cockpit selon la présente invention en deux positions différentes.

La présente description concerne une pointe avant d'aéronef, ou cockpit d'aéronef, destiné à un aéronef commercial, c'est-à-dire destiné plus particulièrement au transport de passagers et/ou de fret. Il s'agit par exemple d'un aéronef dont le fuselage, lorsqu'il est aménagé pour le transport de passagers, peut faire voyager environ cent passagers ou plus.

La partie avant d'un aéronef est aménagée pour recevoir les pilotes de l'aéronef. En général, dans un aéronef du type susmentionné, un pilote et un copilote sont aux commandes de l'aéronef. Les commandes se trouvent dans un local appelé aussi cockpit, placé au niveau de la pointe avant du fuselage. Les termes "cockpit" et "pointe avant" seront considérés dans la présente description comme sensiblement synonymes. Dans le cockpit, de manière classique, se trouvent deux sièges qui font face à un tableau de bord au-dessus duquel se trouve un pare-brise. Un siège accueille le pilote, l'autre le copilote de manière à ce qu'ils se trouvent tous deux assis dans le sens de déplacement de l'aéronef. Face à eux se trouve la planche de bord qui regroupe, d'une part, des moyens de commande permettant le pilotage de l'aéronef et, d'autre part, des moyens de visualisation permettant d'informer le pilote et le copilote sur l'état de l'aéronef, sur son état et sur son environnement. Les moyens de commande peuvent être des boutons poussoirs, des molettes, des boutons rotatifs ou bien aussi des moyens de saisie tels des tablettes ou claviers. Les moyens de visualisation sont quant à eux le plus souvent des voyants et des écrans.

Le nombre et la dimension des divers moyens de commande et de visualisation sont importants pour le dimensionnement du cockpit et pour la détermination de la forme aérodynamique de toute la partie avant du fuselage de l'aéronef.

Le cockpit décrit ci-après est un cockpit ergonomique dont la conception prend en compte les évolutions des divers systèmes avioniques et permettant une réelle évolution de l'environnement de travail des pilotes (le pilote et son copilote).

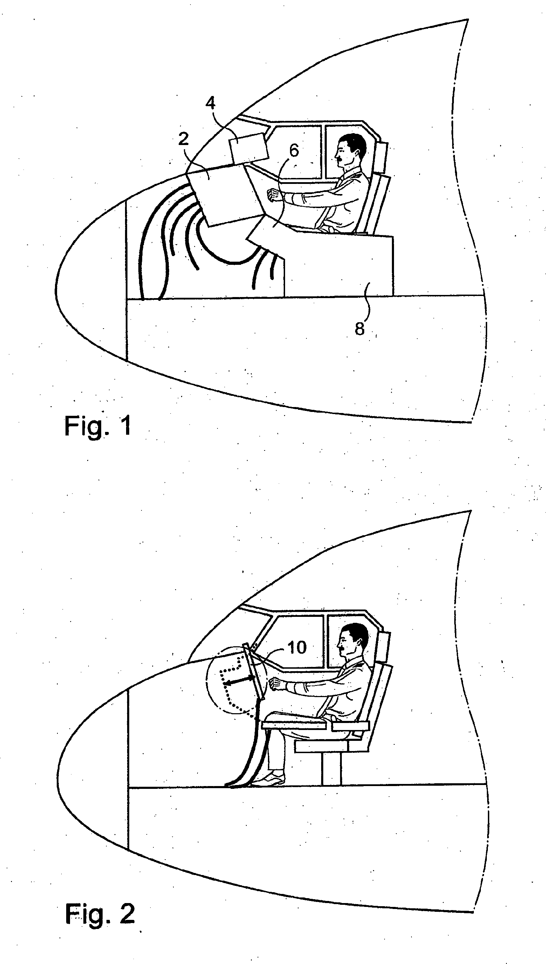

Sur la figure 1, un cockpit de l'art antérieur est représenté schématiquement, et plus particulièrement la planche de bord de ce cockpit et son environnement. La planche de bord représentée comporte sur cette figure un bloc central 2 dans lequel on retrouve par exemple des écrans de contrôle. Au-dessus et en surplomb du bloc central, des blocs de commandes 4 avec divers boutons de commande forment une visière au-dessus des écrans, ce qui correspond à l'équipement « auvent » mentionné précédemment. En dessous du bloc central 2, une console 6 accueille d'autres commandes et aussi par exemple des moyens de saisie (clavier ou autre).

La figure 1 ne représente pas de siège pour accueillir des pilotes. De tels sièges sont destinés à venir prendre place de part et d'autre d'un pylône central 8 qui accueille lui aussi des systèmes avioniques.

En avant de tous ces divers organes de commande et de contrôle, se trouvent de nombreux câbles de connexion ainsi que des conduits d'air pour assurer une bonne ventilation de tous les appareils électriques et électroniques de la planche de bord.

On arrive ainsi à une structure complexe de la planche de bord et de toute la partie avant de l'aéronef.

La figure 2 montre quant à elle une vue similaire à celle de la figure 1 pour un cockpit selon un aspect de la présente invention. Il est proposé ici d'utiliser des écrans plats de visualisation 10 et une console avec des moyens de commande et/ou de saisie. Dans une forme de réalisation préférée, chaque pilote (c'est-à-dire le pilote et le copilote) dispose d'une planche de bord avec un grand écran 10 unique et d'une tablette de travail. Chaque écran se trouvant face à un pilote est entièrement reconfigurable. De préférence, ces écrans 10 sont des écrans tactiles, qui peuvent ainsi également servir de moyens de commande. La structure correspondante est décrite plus en détails par la suite.

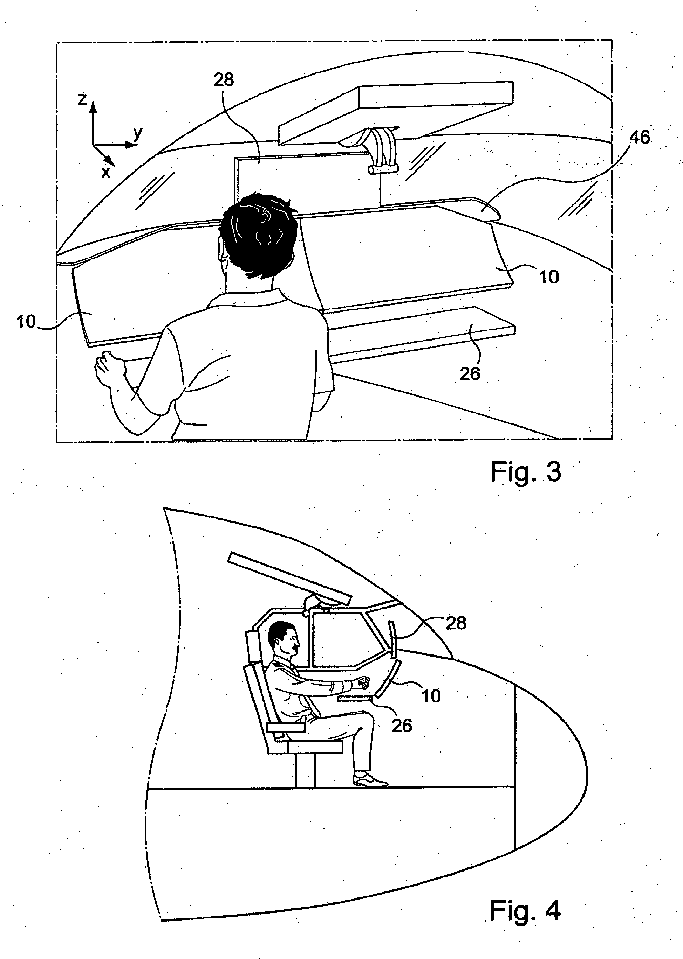

La figure 3 illustre que face à chaque pilote, se trouve un écran 10. On a ainsi un premier écran 10 et un deuxième écran 10 qui sont par exemple symétriques par rapport à un plan séparant les postes de pilotage, voire de préférence identiques. Un seul écran 10 sera donc décrit par la suite. De préférence, chaque pilote dispose aussi d'une tablette 26. Le cockpit de la figure 3 comprend ici en outre un troisième écran 28, escamotable, ainsi qu'un auvent 46.

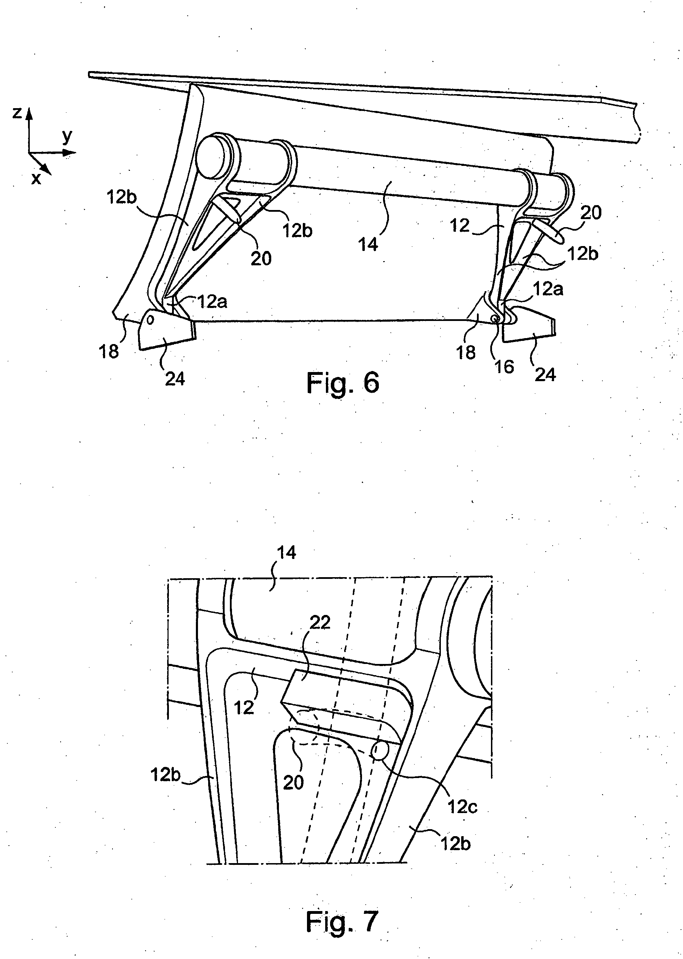

En outre, sur la figure 3 et la figure 6, un repère permet de définir un plan horizontal selon les axes x et y, et un plan vertical selon les axes y et z.

L'écran 10 est de préférence concave, c'est-à-dire que le côté de l'écran 10 se trouvant face au pilote est concave. Ce côté de l'écran présente ainsi la forme d'une surface cylindrique circulaire. La concavité de l'écran 10 est telle que la ligne de focale, c'est-à-dire l'axe de symétrie de la forme cylindrique circulaire de l'écran, passe par la position théorique des yeux du pilote. Ainsi, le pilote visionne l'écran 10 perpendiculairement, quelle que soit la zone de l'écran visée (en vue de côté comme illustré par exemple sur la figure 4). De la sorte, il est possible d'avoir une surface d'écran équivalente (par rapport à un écran plat non concave) plus importante : le gain est estimé ici à 6%.

L'écran 10 est réglable. Il est prévu dans une forme de réalisation préférée de pouvoir faire pivoter cet écran autour de deux axes horizontaux. De la sorte, il est possible de régler l'inclinaison de l'écran par rapport au pilote et de modifier la position en hauteur de l'écran et sa distance au pilote comme expliqué plus loin.

Les réglages de l'écran 10 permettent de diminuer les reflets liés à la surluminosité externe que l'on rencontre souvent dans un cockpit d'aéronef lors des vols de jour. Ils permettent également d'adapter la position de l'écran 10 et d'orienter ce dernier par rapport à la position du pilote qui peut varier au cours d'un vol : par exemple en vol de croisière, le pilote peut prendre une position plus reculée et plus détendue par rapport à la position "théorique" de pilotage. Lorsque l'écran 10 est un écran tactile, il peut aussi être préférable de pouvoir régler la position de l'écran pour le rapprocher des mains de l'utilisateur.

Que l'écran soit un écran tactile ou non, il peut être prévu de disposer à la périphérie de celui-ci, ou bien sur l'un et/ou plusieurs bords de l'écran, des boutons d'action pour des commandes spécifiques. Dans ce cas également, l'écran 10 est de préférence suffisamment rapproché du pilote pour que ce dernier ait facilement accès à ces boutons d'action.

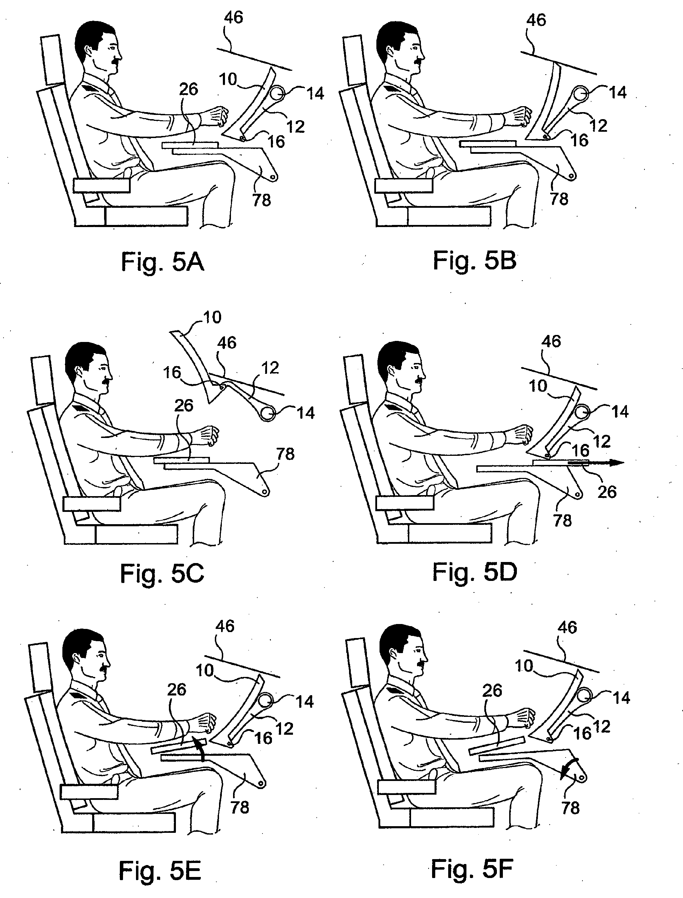

Les figures 5A à 5F illustrent la cinématique d'un dispositif de visualisation selon l'invention comprenant l'écran 10, et notamment un premier axe 16 et un deuxième axe 14 de pivotement de l'écran 10 et diverses positions que peut prendre cet écran 10 par rapport à un pilote.

Chaque écran 10 est monté sur deux bras 12, de préférence symétrique voire identiques, visibles aussi sur la figure 6. Chaque bras 12 présente une première extrémité formant un palier dans lequel vient loger le premier axe 16 de pivotement ainsi qu'une seconde extrémité formant palier pour un deuxième axe 14 de pivotement. Le deuxième axe 14 est un axe fixe par rapport à la structure du cockpit de l'aéronef et permet le pivotement de l'ensemble formé par les bras 12 et l'écran 10 tandis que le premier axe 16 est un axe mobile qui permet de modifier la position relative entre les bras 12 et l'écran 10.

Le deuxième axe 14 est disposé en avant de l'écran 10 (en prenant compte de l'orientation de l'aéronef : l'écran se trouve donc entre le deuxième axe 14 et le pilote et dans la plupart des positions de l'écran 10, ce dernier cache le deuxième axe 14 à la vue du pilote). Le deuxième axe 14 est par exemple une bielle de section relativement importante (par exemple de diamètre supérieur à 50 mm) et fait partie de la structure du cockpit de l'aéronef, ou plus généralement de la structure de l'aéronef. Cette bielle est par exemple utilisée comme renfort pour l'entablement inférieur du pare-brise du cockpit.

Les bras 12 sont donc montés pivotants sur ce deuxième axe 14. Comme le montre la figure 6, chaque bras 12 présente une forme globale de Y, avec une base 12a et deux branches supérieures 12b. L'extrémité libre de chacune des branches supérieures présente un logement formant palier pour recevoir de manière pivotante le deuxième axe 14. La base 12b, qui est ici de hauteur réduite, présente quant à elle un logement formant palier pour recevoir un premier axe 16. La face arrière (c'est-à-dire la face opposée à celle sur laquelle sont formées des images) de l'écran 10 présente quant à elle deux étriers 18 dans chacun desquels vient prendre place une base 12a d'un bras 12, un premier axe 16 traversant à la fois la base 12b et les branches de l'étrier 18 de manière à réaliser une liaison pivotante entre le bras 12 et l'écran 10. Des bagues antifrictions (non représentées) peuvent être prévues dans chacun des (ou uniquement certains) logements des bras 12 recevant soit le deuxième axe 14, soit un premier axe 16.

En combinant les mouvements de pivotement, d'une part, autour du deuxième axe 14 et, d'autre part, autour des premiers axes 16, le pilote peut incliner l'écran 10, le rapprocher de lui et/ou le régler en hauteur. Sur la figure 5A, l'écran 10 est en position éloignée par rapport au pilote et le deuxième axe 14 sert ici de butée de positionnement. Un réglage en inclinaison est alors possible en faisant pivoter les bras 12 et l'écran 10 autour du deuxième axe 14 ou bien en faisant pivoter l'écran 10 autour des premiers axes 16 comme illustré sur la figure 5B.

La figure 5C illustre une position dans laquelle l'écran 10 est relevé et placé en position haute. Cette position est notamment destinée à permettre un accès en avant de l'écran (dans le sens de marche de l'aéronef) pour accéder notamment à des connexions et à du matériel électronique comme expliqué plus loin.

Des moyens de verrouillage sont avantageusement prévus pour permettre de maintenir l'écran dans certaines positions prédéterminées.

Ainsi, il est par exemple prévu la présence de doigts de verrouillage 20 montés sur la face arrière de l'écran 10 pour venir coopérer avec les bras 12. Les doigts de verrouillage 20 sont courbés de telle sorte que lorsque l'écran 10 pivote par rapport aux bras 12, les doigts de verrouillage 20 puissent entrer et sortir d'un alésage 12c prévu dans chaque bras 12. Un dispositif de verrouillage. 22 monté sur chaque bras 12 à côté de l'alésage 12c permet de maintenir le doigt 20 dans une position donnée dans l'alésage 12c. Un indexage peut également être prévu. Dans un tel cas, le dispositif de verrouillage 22 permet le maintien d'un doigt de verrouillage 20 dans plusieurs positions prédéterminées.

Pour maintenir les bras 12 dans une position prédéterminée, il est possible de prévoir des pattes de maintien 24 qui viennent retenir les étriers 18, ou seulement l'axe 16, dans une position prédéterminée. Par exemple, les pattes de maintien 24 comprennent un trou 25 dans lequel vient se loger une extrémité de l'axe 16 de sorte qu'il suffit de tirer sur une partie inférieure de l'écran pour l'en extraire. Les bras 12 ne peuvent alors plus pivoter autour du deuxième axe 14. Selon un autre exemple, les pattes de maintien 24 coopèrent avec les étriers 18 de sorte que la rotation autour du premier axe 16 peut être également bloquée, par exemple grâce à une coopération entre une boucle et un crochet, de sorte qu'un écartement d'une paroi des pattes de maintien 24 permet de dégager les étriers 18 et libérer le mouvement. L'écran 10 peut ainsi être maintenu dans une position de rangement.

L'écran 10 peut être formé par un support rigide, par exemple réalisé dans un matériau composite, notamment un matériau composite à base de carbone, et par un film souple à usage d'écran. Le support présente par exemple une épaisseur de 25 à 30 mm et permet de donner une forme concave à l'écran.

Comme visible notamment sur les figures 4 et 5A à 5F, une tablette de travail 26 est disposée entre chaque écran 10 et le pilote correspondant. Ces tablettes de travail 26 permettent la saisie de données et d'interagir avec l'écran 10 et d'autres systèmes de l'aéronef. Comme illustré sur les figures 5A à 5F, la position de chaque tablette de travail 26 peut s'adapter pour une meilleure ergonomie du poste de pilotage, ou en fonction de la position du pilote et/ou de la position de l'écran 10.

Chaque tablette de travail 26 présente une largeur sensiblement égale à la largeur de l'écran 10 associé. De la sorte, la tablette de travail 26 propose une grande surface de travail pour le pilote. La tablette de travail 26 peut intégrer un clavier et comporter également un dispositif tel une souris d'ordinateur. Il peut également s'agir d'une tablette tactile formant alors une interface avec les divers systèmes avioniques.

Comme décrit précédemment, dans le cockpit décrit ici, chaque pilote dispose ainsi avantageusement d'un écran 10 pouvant prendre plusieurs positions de travail mais aussi au moins une position de stockage, i.e. de rangement. Cet écran 10 tel que décrit plus haut est réglable en inclinaison pour pouvoir éviter au pilote d'avoir des reflets parasites. Il est aussi incurvé (concavité orientée vers le pilote) de manière à optimiser la surface d'affichage et permettre au pilote d'avoir une meilleure vision. La position de l'écran par rapport au pilote est optimisée en fonction de la nature de l'écran : si l'écran est un écran tactile, il sera de préférence placé plus près des pilotes pour faciliter l'accès des pilotes à leur écran. Enfin, cet écran est escamotable (comme sur la figure 5C) pour permette d'accéder à la zone se trouvant en avant (dans le sens du vol) de l'écran.

Cet écran 10 est associé à une tablette de travail 26, elle aussi mobile afin d'augmenter l'ergonomie du poste de travail de chaque pilote. Avec l'écran 10 et sa tablette de travail 26, le pilote peut se consacrer à la gestion du vol de son aéronef et non plus seulement au pilotage de celui-ci.

Le volume de la planche de bord est limité. Ceci permet de libérer de l'espace à l'intérieur du cockpit. Cet espace libéré peut être utilisé pour accueillir des systèmes logés auparavant dans d'autres parties de l'aéronef et/ou pour optimiser le volume du cockpit et sa forme aérodynamique extérieure.

La forme de réalisation préférée décrite ci-dessus prévoit d'avoir deux écrans mobiles, un pour chaque pilote, sans prévoir d'autre écran à la même hauteur que ces deux écrans. Il pourrait toutefois être aussi envisagé d'avoir dans la zone centrale de la planche de bord un écran fixe, accessible et/ou parfaitement visible par les deux pilotes, et de chaque côté de cet écran fixe, un écran 10 mobile tel l'écran 10 décrit plus haut et tel que visible notamment sur la figure 6.

Une variante de réalisation d'un cockpit tel que décrit ci-dessus prévoit, de manière originale, de disposer un troisième écran 28 en partie supérieure centrale de la planche de bord. Ce troisième écran 28 est prévu pour être positionné au-dessus des deux écrans 10 décrits précédemment et de préférence à cheval entre eux deux, de préférence à égales distances des deux postes des pilotes. Ce positionnement dans un cockpit d'aéronef est tout à fait original. En effet, cette position est telle que ce troisième écran 28 vient partiellement occulter la vision du pilote à travers le pare-brise de l'aéronef. Il est prévu de pouvoir escamoter ce troisième écran 28 pour que le pilote puisse profiter, lorsque c'est nécessaire, de la meilleure vision possible à travers le pare-brise. Un tel troisième écran 28, son intégration à une planche de bord et son utilisation possible sont décrits plus en détails dans la suite de la description.

Il convient de remarquer au préalable, que les exigences réglementaires lisées à la visibilité des pilotes prévoient pour les deux pilotes (ou plus précisément le pilote et le copilote) la présence d'une zone centrale "morte". La réglementation prévoit donc un champ mort de vision pour le pilote et le copilote qui est, de manière tout à fait originale, mis à profit pour installer un écran. Les figures 3, 4, et 8 à 12 illustrent comment un tel écran peut venir prendre place dans un cockpit d'aéronef.

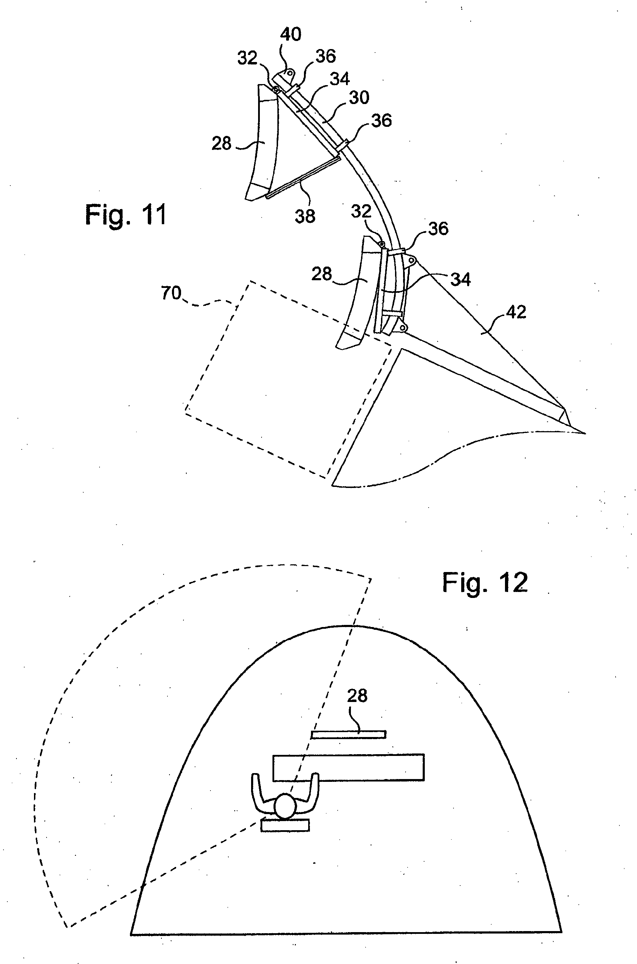

La présence de cet écran 28 permet d'avoir dans le cockpit une surface d'affichage supplémentaire dans le champ de vision du pilote et du copilote. Il est prévu de pouvoir escamoter cet écran de manière à améliorer sa vision à travers le pare-brise, en agrandissant son champ de vision à travers celui-ci. Ainsi, durant les phases de vol pendant lesquelles la visibilité à travers le pare-brise n'est pas critique, l'écran supplémentaire (ou troisième écran 28) est visible des pilotes et durant les phases de vol pendant lesquelles la visibilité à travers le pare-brise est plus critique, l'écran supplémentaire est escamoté comme expliqué plus loin. La figure 12 montre très schématiquement le cockpit en vue de dessus. Seuls sont représentés sur cette figure très schématiquement la forme du cockpit, le troisième écran 28 dans une position déployée dans laquelle il occulte partiellement la vision d'un pilote à travers le pare-brise du cockpit, un pilote et un dossier de siège correspondant, une tablette et, en traits pointillés, une représentation schématique du champ de vision du pilote représenté.

Il est proposé ici de rendre le troisième écran 28 mobile grâce notamment à deux rails 30 courbes et parallèles. Le déplacement en translation du troisième écran 28 par rapport aux deux rails 30 est de préférence réalisé à l'aide d'un moteur (non représenté) mais un déplacement manuel peut aussi être envisagé. On peut ici aussi prévoir que le déplacement vers la position escamotée ou vers la position déployée se fait automatiquement, sans action des pilotes. À titre d'exemple simplement illustratif, on peut par exemple prévoir que le troisième écran 28 s'escamote (et est caché à la vue des pilotes) dès que l'aéronef descend en dessous d'une altitude prédéterminée. Inversement, toujours à titre purement illustratif, on peut prévoir que le troisième écran 28 passe d'une position escamotée dans laquelle les pilotes ne peuvent le voir depuis leurs sièges à une position déployée, dans laquelle le troisième écran 28 se trouve entre le pare-brise et les pilotes, lorsque l'aéronef entre dans une phase de vol de croisière. Un dispositif de sécurité peut par exemple être prévu aussi pour qu'il ne soit pas possible au troisième écran 28 d'être en position déployée durant les phases de décollage, d'atterrissage et de roulement au sol (ou en anglais : taxiing).

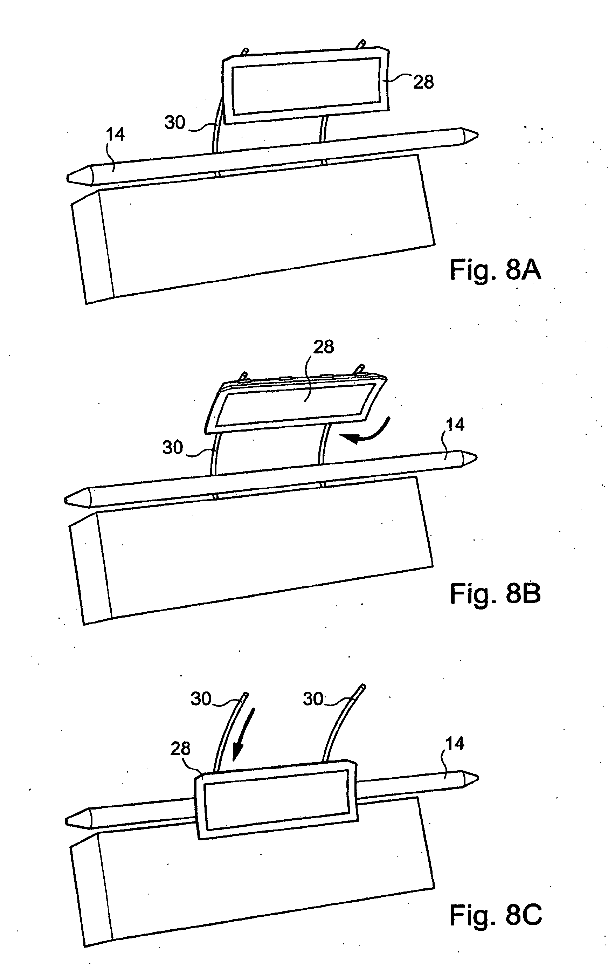

Le troisième écran 28 est de préférence également monté pivotant autour d'un troisième axe 32, lui-aussi horizontal. De même que pour les deux écrans 10, le fait de pouvoir faire pivoter le troisième écran 28 permet d'éviter de voir des reflets sur cet écran et de prendre une bonne position adaptée à la lecture des informations affichées sur ledit écran par les pilotes. Les figures 8A à 8C illustrent diverses positions que peut prendre le troisième écran 28. On rembarque que ce troisième écran 28 peut se translater le long des rails 30 et peut également pivoter autour du troisième axe 32 qui est un axe horizontal, proche du bord supérieur du troisième écran 28.

Le troisième écran 28 reprend sensiblement les mêmes caractéristiques que les écrans 10 décrits ci-dessus. Il s'agit de préférence d'un écran incurvé avec une concavité orientée vers les pilotes, et avantageusement, l'écran est obtenu par collage -ou tout autre moyen de fixation adapté- d'un film souple à usage d'écran sur un support, tel par exemple un panneau sandwich réalisé dans un matériau composite à base de carbone. Toutefois, on ne sortirait pas du cadre de la présente invention si le troisième écran 28 présentait des caractéristiques différentes.

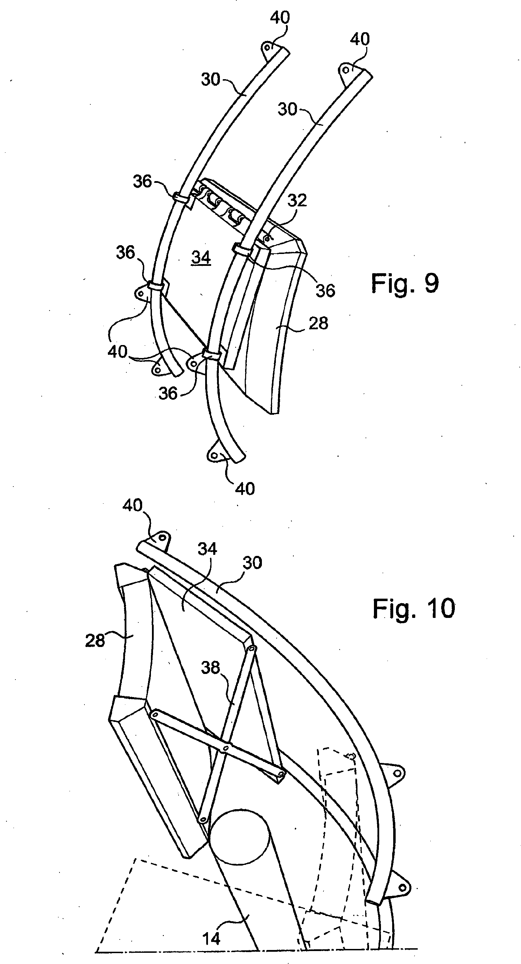

Les figures 9 et 10 illustrent plus en détails les moyens mis en oeuvre pour permettre le déplacement du troisième écran 28. Comme il ressort de ces figures, le troisième écran 28 est monté pivotant sur un chariot 34 qui vient coulisser sur les rails 30.

Le chariot 34 se présente sous la forme d'une plaque sensiblement rectangulaire. Il présente ainsi deux faces principales, une face interne se trouvant en vis-à-vis du troisième écran 28 et une face externe opposée à la face interne. Les rails 30 s'étendent chacun dans un plan sensiblement vertical (et longitudinal par rapport à l'axe de l'aéronef). Le chariot 34 présente deux longs bords sensiblement horizontaux reliés par deux petits bords se trouvant eux-aussi dans un plan sensiblement vertical et parallèle aux rails 30. Le troisième axe 32 se trouve au niveau du bord horizontal supérieur du chariot 34. La liaison entre le chariot 34 et le troisième écran 28 est réalisé à la manière d'une charnière, le troisième axe 32 correspondant à l'axe de ladite charnière.

Le chariot 34 présente sur sa face opposée à ses petits bords des paliers 36 dans lesquels viennent coulisser les rails 30. Les paliers 36 sont par exemple formés par des anneaux ouverts à billes de manière à assurer un bon coulissement sur les rails 30. Dans la forme de réalisation représentée sur les figures, quatre paliers 36 sont disposés sur la face externe du chariot 34, sensiblement aux quatre coins de la face externe.

Le long bord inférieur du chariot 34 (figure 10) est relié au troisième écran 28 par un croisillon 38 qui permet, d'une part, un meilleur maintien du troisième écran 28 par rapport au chariot 34 et donc aussi par rapport aux rails 30 et, d'autre part, de réaliser un verrouillage du troisième écran 28 par rapport à une (ou plusieurs) position(s) prédéterminée(s) avec le chariot 34.

On remarque également sur les figures 9 et 10 notamment la présence de pattes de fixation 40 qui permettent de monter les rails 30 sur la structure du cockpit.

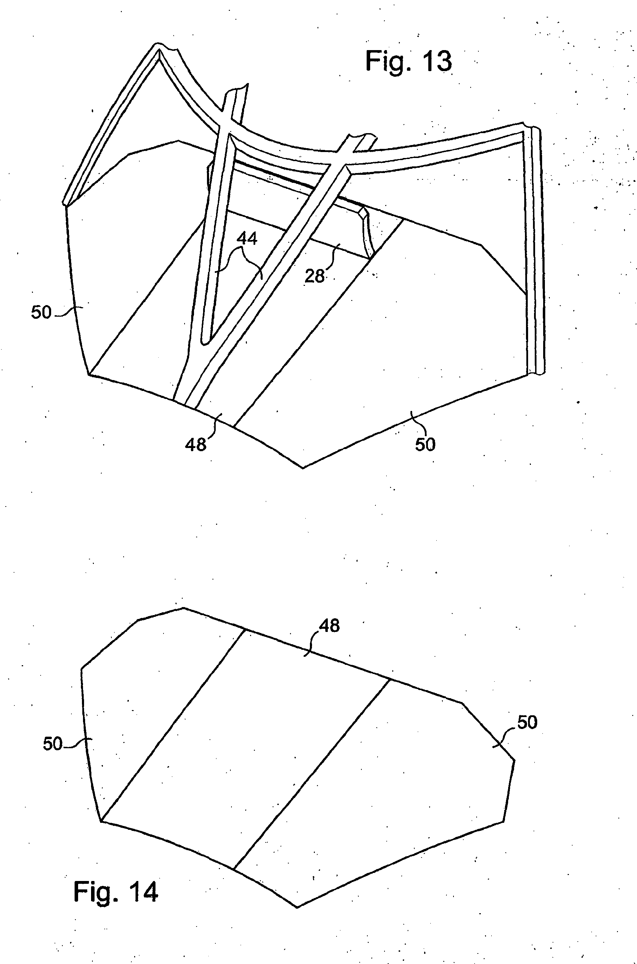

La figure 11 illustre en vue de côté le troisième écran 28 dans une position déployée et dans une position escamotée. Il montre aussi la fixation inférieure des rails 30. En partie inférieure, chaque rail 30 présente deux pattes de fixation 40 qui sont reliées à une partie structurelle (décrite plus loin) par l'intermédiaire d'un triangle de liaison 42. En partie supérieure, chaque rail 30 présente par exemple une patte de fixation 40 qui est destinée à être fixée sur un montant central 44 en V du pare-brise du cockpit (figure 13).

Quelques utilisations possibles d'un troisième écran 28 décrit ci-dessus sont proposées ci-après. Il ne s'agit bien entendu que d'exemples illustratifs et d'autres utilisations pourront bien entendu être envisagées pour cet écran.

Le troisième écran 28 peut être considéré comme un écran secondaire et est alors utilisé pour afficher des informations non essentielles (par exemple accès à Internet, écran de caméra de surveillance de cabine, etc.). Les informations essentielles concernant le pilotage sont quant à elles mentionnées sur les écrans 10.

Ce troisième écran 28 peut également être utilisé comme écran de secours au cas où l'un des écrans 10 se trouvant face aux pilotes devait tomber en panne. Cette utilisation peut bien entendu venir en complément de l'utilisation prévue au paragraphe précédent.

Il peut aussi être envisagé de prévoir des moyens de fixation réversibles du troisième écran sur son chariot. Dans un tel cas de figure, le troisième écran pourrait par exemple être détaché et utilisé dans l'aéronef, ou en dehors de celui à une étape, comme une tablette mobile.

Pour le cockpit décrit ci-dessus, il est également proposé ici de réaliser un auvent 46 qui permette essentiellement d'éviter d'avoir des reflets sur les écrans 10 principaux ainsi que des réflexions du soleil qui pourraient gêner les pilotes. Cet auvent 46, de manière originale, est conçu de telle sorte qu'il ne soit pas un obstacle dangereux pour les pilotes lors d'une décélération brutale.

Dans un cockpit de l'art antérieur, comme illustré sur la figure 1, les fonctions précitées sont remplies par un bloc de commandes 4 qui est placé en surplomb par rapport aux différents écrans en formant ainsi une visière. Ce bloc de commandes 4 est fixé en-dessous d'une plaque supérieure rigide qui est difficilement démontable. Le bord de la plaque supérieure faisant face aux pilotes est protégé par un surmoulage en mousse destiné à amortir les chocs frontaux en cas de décélération brutale. La plaque supérieure empêche, ou rend très difficile, tout accès à l'avant (dans le sens du vol de l'aéronef) du tableau de bord et donc à toutes les connexions et dispositifs placés entre la planche de bord et l'extrémité avant du cockpit.

Il est proposé ici de réaliser un auvent 46 en trois parties : une partie centrale 48 et deux parties latérales 50.

La partie centrale 48 est par exemple rigide. Elle est disposée en avant des pilotes et entre ceux-ci. Elle s'étend depuis l'entablement inférieur du pare-brise vers l'arrière en venant recouvrir partiellement les écrans 10 dans leur position de travail (figures 5A ou 5B par exemple). La largeur de cette partie centrale est limitée de telle sorte qu'elle se trouve en dehors de toute zone à risque en cas de crash. De la sorte, en cas de décélération brutale, il n'y a aucun risque d'avoir un choc entre un pilote, notamment la tête d'un pilote, et la partie centrale 48 de l'auvent.

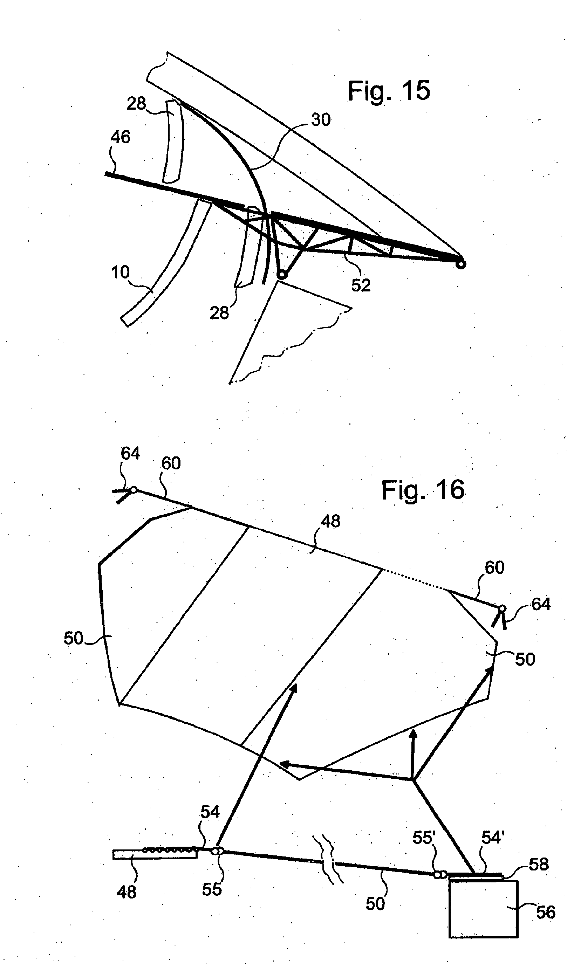

Cette partie centrale 48 est par exemple réalisée dans un matériau composite qui présente l'avantage d'être résistant et léger. Elle peut ainsi être constituée d'un panneau sandwich à base de carbone et avoir une épaisseur de l'ordre de 10 à 12 mm. Deux structures latérales 52 métalliques (dont une est visible sur la figure 15), par exemple composé d'un treillis, participant avantageusement au support et à la rigidification de la partie centrale 48 lors de son positionnement dans le cockpit, de préférence juste au-dessus des écrans 10, et de sorte que le troisième écran 28 dans sa position déployée se retrouve au-dessus de l'auvent 46. Dans la forme de réalisation représentée, la partie centrale présente un bord avant (selon le sens de marche de l'aéronef) qui vient épouser la forme du pare-brise au niveau de son entablement inférieur, et un bord transversal arrière du côté des pilotes. Des bords latéraux viennent rejoindre les extrémités du bord avant aux extrémités du bord arrière. Les structures latérales 52 métalliques viennent supporter les bords latéraux de la partie centrale 48 ou s'étendent parallèlement à ces bords latéraux à proximité de ceux-ci (de quelques millimètres à quelques centimètres, par exemple de 1 à 10 centimètres).

De préférence, la largeur de la partie centrale 48 est, au moins localement, supérieure à la largeur du troisième écran 28. Une ouverture peut alors être réalisée dans la partie centrale 48 pour permettre le passage du troisième écran 28 lorsque celui-ci passe d'une position escamotée à une position déployée.

Les deux parties latérales 50 de l'auvent 46 sont symétriques par rapport à la partie centrale 48. Ces parties latérales 50 sont réalisées dans un matériau souple qui est tendu de manière à former une surface sensiblement plane. Ces parties latérales 50 peuvent ainsi par exemple être réalisées dans une toile. Cette toile est en partie fixée sur son environnement (encadrement de glace de pare-brise, partie centrale 48 rigide de l'auvent) et en partie par un câble fin lui même tendu par un dispositif approprié. La toile utilisée est choisie de préférence comme étant une toile fine et légère, résistante et souple de manière à pouvoir être tendue avec un effort modéré. Le fait d'avoir des parties souples en vis-à-vis des pilotes permet ainsi de limiter les risques de chocs frontaux en cas de décélération brutale.

Les parties latérales 50 et la partie centrale 48 auront de préférence une face supérieure présentant un aspect non réfléchissant. Ils peuvent par exemple présenter une face supérieure de couleur noir mat.

La figure 16 illustre le montage d'une partie latérale 50. La partie basse de la figure 16 est une vue schématique de côté tandis que la partie haute de cette figure est une vue schématique en perspective. Des flèches entre les deux parties de la figure montrent les correspondances entre ces deux parties de figure.

Il est proposé ici par exemple de fixer chaque partie latérale 50 sur la structure environnante par l'intermédiaire de fermetures à glissières 55 (telles par exemple celles commercialisées sous la marque "Éclair"). Une telle fermeture 55 comporte deux bandes parallèles bordées d'une crémaillère dont les dents (métalliques ou de matière synthétique) s'engrènent au moyen d'un curseur (petite pièce mobile coulissante nommée en anglais slider) qu'il suffit de tirer. Dans le cas présent, pour une première fermeture à glissière 55, une première bande 54 est fixée à la partie centrale 48 de l'auvent et l'autre bande est formée par la partie latérale 50 dont le bord correspondant présente une crémaillère complémentaire de la crémaillère de la première bande correspondante. La fixation de la première bande 54 est par exemple réalisée par un collage (symbolisé sur là figure 16 par des petits points). La partie latérale 50 vient aussi se fixer sur la structure inférieure, ou entablement inférieur 56, du pare-brise. Cette fixation est également réalisée par une fermeture à glissières 55'. Une première bande 54' de la fermeture à glissière 55' est fixée sur l'entablement inférieur 56 à l'aide, par exemple, d'un ruban auto-agrippant 58. Un ruban auto-agrippant comporte quant à lui une surface munie de crochets et une autre surface munie de bouclettes correspondantes. Il est proposé ici que la première bande 54' porte, d'une part, des crochets ou des bouclettes et, d'autre part, une crémaillère sur l'un de ses bords. L'autre surface du ruban auto-agrippant 58, avec les bouclettes ou les crochets, est fixée sur l'entablement inférieur 56. La partie latérales 50 correspondante comporte sur son bord faisant face à l'entablement inférieur 56 également une crémaillère pouvant coopérer avec la crémaillère de la première bande 54' pour former avec un curseur une fermeture à glissière 55'.

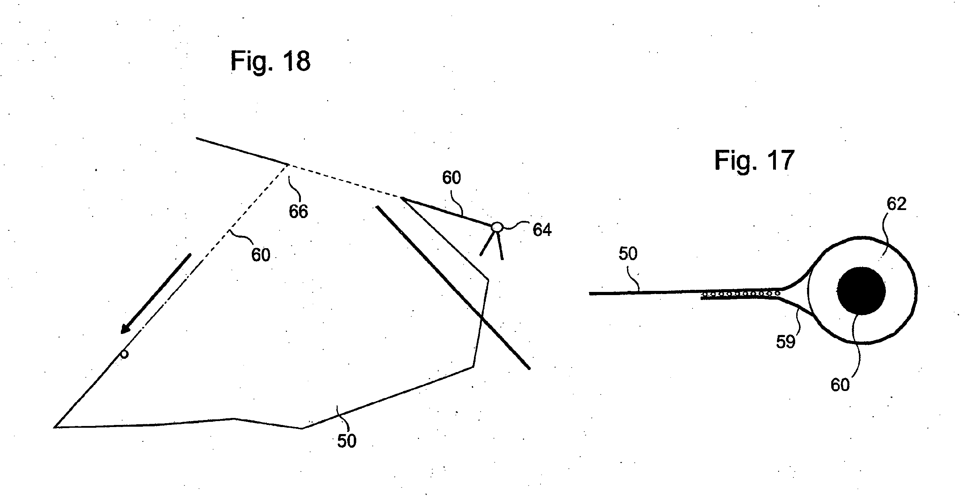

Le maintien du bord libre de la partie latérale 50, c'est-à-dire le bord se trouvant face à un pilote (ou copilote) est illustré sur les figures 17 et 18. Le bord libre de la partie latérale 50 est représenté à échelle agrandie et en coupe sur la figure 17. Ce bord présente un ourlet 59 qui est représenté comme étant réalisé par collage (petits points rappelant des points de colle). Toutefois, d'autres modes de réalisation -couture, bande auto-agrippante, agrafage, etc.- pourraient bien entendu être envisagés ici. L'ourlet 59 contient un câble de tension 60 protégé par un enrobage 62 de mousse.

Le câble de tension 60 est formé de deux parties distinctes : une première partie est formée par un brin, ou une tresse, souple mais réalisée dans un matériau avec un faible module d'élasticité et une seconde partie avec un module d'élasticité bien plus important. La première partie du câble de tension 60 se comporte comme un câble métallique qui est souple mais ne s'allonge pas - ou très peu - lorsqu'il est soumis à une traction. Cette première partie est représentée par un trait plein puis un trait en pointillés (car à l'intérieur de l'ourlet 59) sur la figure 18. La seconde partie du câble de tension 60 est bien plus élastique et se déforme comme du caoutchouc par exemple. Cette seconde partie est représentée par un trait mixte sur la figure 18.

Les deux extrémités du câble de tension 60 sont fixées à un point fixe. Un premier point fixe est par exemple réalisé par un micro mât 64 qui se trouve par exemple sur un montant de pare-brise. Le second point fixe est un point d'attache réalisé sur un bord latéral de la partie centrale 48. Une poulie 66 est utilisée pour faire varier l'orientation du câble de tension 60.

Lors du montage du montage du câble de tension 60, sa longueur est adaptée pour obtenir la tension souhaitée. La seconde partie du câble de tension permet de maintenir cette tension dans le temps et garantit d'avoir une toile tendue pour réaliser la partie latérale 50 de l'auvent 46. En outre, cette seconde partie de câble permet à la toile de se déformer en cas de choc.

L'auvent 46 ainsi réalisé permet de remplir ses fonctions premières (supprimer les divers reflets et améliorer la vision des pilotes sur leurs écrans). Il ne forme pas un obstacle gênant en cas de choc frontal puisqu'il est déformable. Enfin, il présente l'avantage d'être démontable et de facilement permettre un accès en avant des écrans du tableau de bord. De manière tout à fait originale, il devient possible avec un auvent tel que décrit plus haut d'accéder par le dessus aux connexions et équipements se trouvant en avant du tableau de bord. En outre, l'auvent ainsi réalisé est très léger par rapport aux auvents de l'art antérieur et d'un encombrement très réduit. Il est également très modulable (forme, position, etc.).

En variante de réalisation, il peut aussi être envisagé d'avoir un auvent entièrement réalisé en matériau souple. Le principe de fixation reste similaire, les supports latéraux métalliques pouvant également être utilisés pour réaliser la tension de la toile.

Comme il ressort de la description qui précède, grâce notamment à l'utilisation d'écrans plats et à la simplification de la planche de bord, dé l'espace est disponible à l'avant des écrans 10. De plus; l'accès à cet espace est doublement facilité puisqu'il est possible d'y accéder, d'une part, en déplaçant les écrans 10 et, d'autre part, en retirant l'auvent 46, qui se démonte facilement, au moins au niveau de ses parties latérales 50.

Enfin, comme visible sur la figure 15 par exemple, l'auvent 46 est de préférence légèrement incliné de sorte que son bord avant est légèrement abaissé, ce qui limite la présence de la face supérieure de l'auvent 46 dans le champ de vision des pilotes.

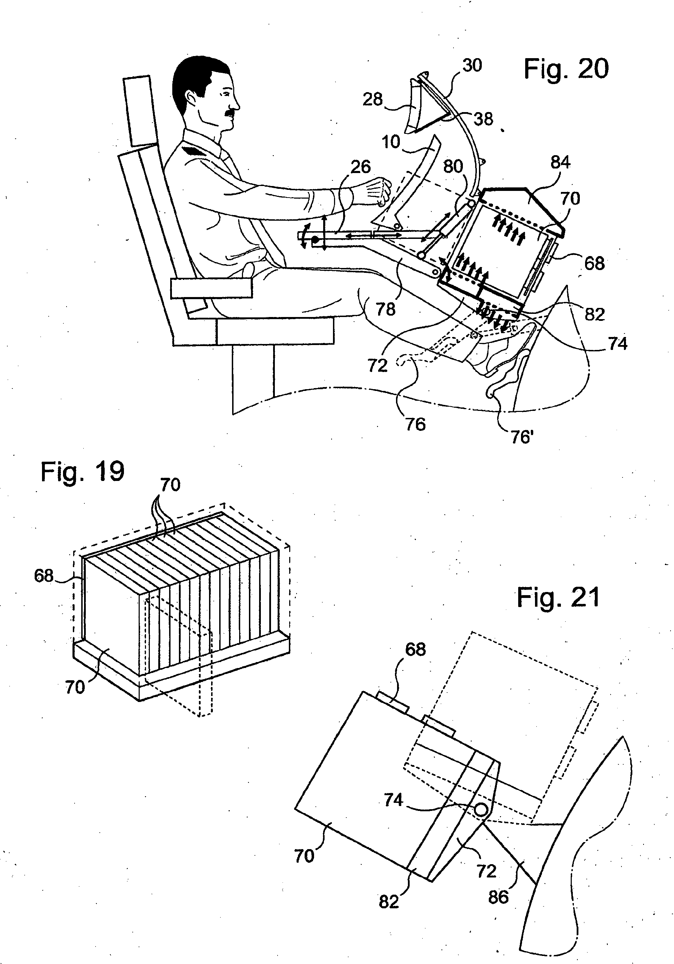

Il est proposé ici de loger derrière les écrans 10 du matériel électronique qui se trouve habituellement (pour les aéronefs concernés par la présente invention) dans une soute se trouvant sous le cockpit. Comme représenté notamment sur la figure 20, un meuble avionique vient avantageusement prendre place à l'avant du cockpit. L'implantation de ce meuble, représenté seul sur la figure 19, est décrite ci-après.

L'emplacement choisi est adapté pour recevoir une étagère de type IMA (acronyme anglais pour Integrated Modular Avionics, soit en français Avionique Modulaire Intégrée). Ce nouveau format d'avionique a pour but de ramener des fonctions logicielles au niveau de calculateurs modulaires identiques. Ces fonctions logicielles étaient auparavant chacune prises en charge par des calculateurs dédiés.

Un exemple d'étagère de type IMA est montré sur la figure 19. Une carte mère 68 est installée en fond de meuble et reçoit des cartes électroniques, ou cartes filles 70. Les cartes filles 70 sont toutes disposées parallèlement les unes à côté des autres et s'étendent perpendiculairement à la carte mère 68.

Il est donc proposé de disposer une telle étagère en avant des écrans 10 du tableau de bord, ladite étagère étant portée par un support 72. Ce dernier est fixé sur la structure de l'aéronef de manière à recevoir l'étagère de type IMA. Le support 72 présente une face supérieure portant l'étagère de type IMA. La carte mère s'étend perpendiculairement à la face supérieure du support 72 et les cartes filles 70 viennent se connecter et se déconnecter par un mouvement de translation parallèle à la face supérieure du support 72. Comme illustré par exemple sur la figure 20, la face supérieure du support 72 est inclinée vers l'avant du cockpit. La carte mère 68 se trouve en position avant, c'est-à-dire vers l'avant du cockpit et les cartes filles 70 se déconnectent de leur carte mère 68 dans un mouvement de translation vers l'arrière de l'aéronef et vers le haut.

Le support 72, de par sa position notamment, peut assurer de nombreuses autres fonctions. Ainsi par exemple, la face inférieure du support peut être mise à profit pour supporter un palonnier 76. Ce dernier est une commande de vol par laquelle le pilote agit sur les gouvernes de direction et peut opérer une rotation de l'aéronef autour de son axe de lacet. De manière classique, un palonnier 76' est actionné par le pilote avec ses deux pieds. Les moyens de commande, des pédales le plus souvent, sont montées sur le sol du cockpit. Pour simplifier la structure du cockpit et libérer le sol, il est avantageusement proposé ici de fixer les pédales du palonnier 76 sous le support 72, comme représenté en pointillés sur la figure 20.

Comme montré sur la figure 21, le support 72 est de préférence monté pivotant autour d'un axe 74 fixe sensiblement horizontal. Pour simplifier la structure de l'ensemble formé par le support 72 et les pédales 76 de commande de palonnier, l'axe de rotation de ces pédales 76 est en correspondance avec l'axe 74 de pivotement du support 72.

Le support 72 porte un caisson 82 décrit plus en détails plus loin. L'ensemble formé par le support 72 et le caisson 82 est avantageusement utilisé pour recevoir les tablettes de travail 26. Le support 72 et lé caisson 82 portent ainsi une paire de bras 78 mobile qui vient prendre place devant chaque pilote, au niveau de l'écran 10 correspondant. Comme montré sur la figure 20, une paire de bras 78 est montée pivotante par rapport au support 72 et un vérin 80 permet de régler la position relative entre le support 72 et les bras 78. La tablette de travail 26 peut quant à elle également se déplacer en translation et en rotation par rapport à la paire de bras 78 correspondante. De nombreux réglages sont ainsi possible et chaque pilote peut alors adapter au mieux la position de sa tablette de travail en fonction de sa morphologie, du réglage de son siège, de sa position, ou autres. Les figures 5A à 5F illustrent diverses positions qui peuvent être prises par la tablette de travail 26.

Il est prévu que la tablette de travail 26 relie à chaque fois les deux bras d'une paire de bras 78. On pourrait également prévoir un plateau monté sur chaque paire de bras 78 et de déplacer la tablette de travail 26 par rapport au plateau reliant les bras correspondants. Dans un cas on libère un maximum d'espace à l'avant du pilote, dans l'autre cas, le plateau forme une surface sur laquelle le pilote peut déposer divers objets formant ainsi une tablette.

Entre les deux paires de bras 78 (une devant le pilote et l'autre devant le copilote), il est possible de prévoir deux bras fixes (non représentés) pour former une tablette entre les deux pilotes. Il n'est pas nécessaire a priori de prévoir de pouvoir régler la position d'une telle tablette mais on pourrait bien entendu prévoir soit un réglage complet de la position de cette tablette, soit uniquement prévoir de pouvoir la rabattre pour libérer de l'espace.

L'étagère de type IMA intègre aussi, comme c'est l'usage pour ce type de matériel, une ventilation des composants électroniques. Cette ventilation est obtenue par soufflage forcé et par extraction forcée d'air. Le caisson 82 est prévu sur le support 72. Il s'agit d'un caisson 82 creux, étanche, qui est destiné à remplir la fonction de distributeur d'air sous pression. L'aspiration est assurée quant à elle par un élément 84 disposé sur toute la face supérieure de l'étagère de type IMA. Cet élément 84 fait ainsi office à la fois de couvercle pour l'aspiration et de parapluie assurant ainsi une protection du matériel informatique contre d'éventuelles infiltrations qui pourraient se produire suite par exemple à des condensations. Pour assurer la fonction de refroidissement du matériel électronique de l'étagère de type IMA, le caisson 82 et l'élément 84 sont reliés aux circuits indépendants (non représentés) prévus classiquement dans un aéronef pour le soufflage et l'extraction d'air dédiés uniquement aux systèmes électriques.

De manière originale, il est proposé ici d'intégrer aussi la fonction de climatisation de l'extrémité avant du cockpit au caisson 82. Ce dernier est alors divisé en deux parties (figure 20). Une partie est alors dédiée au soufflage d'air vers les composants électroniques tandis que l'autre partie est dédiée à la climatisation de la partie avant, notamment avant basse, du cockpit. Des diffuseurs sont alors prévus pour envoyer de l'air climatisé vers les pieds des pilotes. La deuxième partie du caisson 82 est ici reliée à un manchon (non représenté) du circuit de climatisation de l'aéronef. Cette intégration permet de simplifier l'installation dans cette zone du cockpit et ainsi assurer des gains de volume, de coût de réalisation et d'intégration et enfin de masse pour l'aéronef.

L'accès aux cartes filles 70 peut facilement être réalisé en plaçant les écrans 10 dans la position illustrée sur la figure 5C. Pour un accès aux connexions à l'arrière de l'étagère de type IMA, comme déjà mentionné plus haut, il est prévu de pouvoir faire basculer le support 72 comme illustré sur la figure 21, le support 72 étant pivotant. autour de l'axe 74 de pivotement. Cette figure montre également l'une des pattes de support 86 qui porte l'axe de pivotement et le support 72. Ces pattes de support 86 sont montées directement sur la structure de l'aéronef.

La solution décrite permet une optimisation de l'espace avant d'un cockpit. Le matériel avionique disposé en avant des écrans est dans un emplacement bien sécurisé de par sa localisation proche des pilotes.

La solution proposée permet aussi une simplification de l'aménagement de la partie avant du cockpit malgré l'intégration d'un grand nombre de fonctions.

Le nouveau concept de cockpit tel que décrit ci-dessus permet d'obtenir un poste de pilotage d'aéronef très innovant permettant de réaliser notamment des gains en masse, en volume, en coûts de réalisation, pour la maintenance et aussi en termes de sécurité. Cette solution permet notamment une meilleure intégration de systèmes avioniques de l'aéronef.

La présente invention ne se limite pas à la forme de réalisation préférée décrite ci-dessus à titre d'exemple non limitatif et représentée sur les dessins, ni aux variantes évoquées. Elle concerne toutes les variantes de réalisation à la portée de l'homme du métier dans le cadre des revendications ci-après.

## Revendications

1. Cockpit d'aéronef comportant un premier siège destiné à recevoir un pilote, un second siège destiné à recevoir un copilote, au moins un premier dispositif de visualisation comprenant un premier écran (10) se trouvant face au premier siège, au moins un second dispositif de visualisation comprenant un second écran (10) se trouvant face au second siège, et un pare-brise,
**caractérisé en ce qu'**il comporte en outre un troisième dispositif de visualisation présentant un troisième écran (28), mobile, et un support permettant au troisième écran (28) de se déplacer d'une première position dite déployée vers une position dite escamotée, **en ce que** dans la position déployée le troisième écran (28) se trouve au-dessus du premier écran (10) et du second écran (10) de manière à être visible à la fois par une personne assise sur le premier siège et par une personne assise sur le second siège et vient occulter une partie du pare-brise à la fois pour une personne assise sur le premier siège et pour une personne assise sur le second siège, et **en ce que** dans la position escamotée le troisième écran (28) est abaissé par rapport à sa position déployée de manière à rendre visible, au moins partiellement, la partie du pare-brise occultée dans la position déployée pour une personne assise sur le premier siège et pour une personne assise sur le second siège.

2. Cockpit d'aéronef selon la revendication 1, **caractérisé en ce que** le troisième écran (28) dans sa position déployée est disposé en position centrale dans le cockpit, et **en ce que** dans sa position escamotée le troisième écran (28) est disposé partiellement derrière le premier écran (10) et partiellement derrière le second écran (10) pour un observateur placé sur le premier siège ou sur le second siège.

3. Cockpit d'aéronef selon l'une quelconque des revendications 1 ou 2, **caractérisé en ce qu'**au moins le premier dispositif de visualisation comportant un premier écran (10) comporte en outre un support, et **en ce que** l'écran (10) est monté pivotant sur son support autour d'un premier axe (16) sensiblement horizontal, et **en ce que** le support comporte des moyens (12) permettant un réglage en hauteur de l'écran (10).

4. Cockpit d'aéronef selon la revendication 3, **caractérisé en ce que** le support comporte un deuxième axe (14) fixe sensiblement horizontal et au moins un bras (12) présentant une première extrémité montée pivotante sur le premier axe (16) et une seconde extrémité portant le deuxième axe (14) fixe.

5. Cockpit d'aéronef selon l'une quelconque des revendications 1 à 4, **caractérisé en ce qu'**il comporte en outre un auvent (46) recouvrant la premier dispositif de visualisation et le second dispositif de visualisation, **en ce que** le troisième écran (28), dans sa position déployée se trouve au-dessus de l'auvent (46), **en ce que** le troisième écran (28) dans sa position escamotée se trouve au-dessous de l'auvent (46), et **en ce qu'**une ouverture de passage est réalisée dans l'auvent (46) pour permettre le passage du troisième écran (28) lorsqu'il passe de sa position déployée à sa position escamotée ou inversement.

6. Cockpit d'aéronef selon la revendication 5, **caractérisé en ce que** l'auvent (46) comporte une partie centrale (48) et deux parties latérales (50), et **en ce que** chaque partie latérale (50) comporte, d'une part, une toile et, d'autre part, des moyens de tension pour maintenir ladite toile.

7. Cockpit d'aéronef selon la revendication 6, **caractérisé en ce que** la partie centrale (48) est une partie rigide et sert partiellement de structure pour le maintien de chaque toile des parties latérales (50).

8. Cockpit d'aéronef selon l'une quelconque des revendications 1 à 7 **caractérisé en ce qu'**il comporte une planche de bord intégrant au moins le premier écran (10) de visualisation, et **en ce qu'**un meuble avionique est disposé en avant de l'écran de visualisation.

9. Cockpit d'aéronef selon la revendication 8, **caractérisé en ce qu'**un support (72) sensiblement plan vient porter le meuble avionique, **en ce qu'**une carte électronique, dite carte-mère (68), s'étend sensiblement perpendiculairement au support (72) et reçoit des cartes électroniques, dites cartes filles (70), qui s'étendent en étant perpendiculaires à la fois à la carte mère (68) et au support (72).

10. Cockpit d'aéronef selon la revendication 8 ou la revendication 9, **caractérisé en ce qu'**un support (72) du meuble avionique est conformé de manière à pouvoir supporter un clavier de saisie.

11. Cockpit d'aéronef selon l'une des revendications 6 à 10, **caractérisé en ce qu'**un support (72) du matériel électronique comporte une face supérieure et une face inférieure, **en ce que** la face supérieure reçoit ledit matériel électronique, et **en ce que** la face inférieure est conformée pour supporter au moins un palonnier,

12. Aéronef, **caractérisé en ce qu'**il comporte un cockpit selon l'une des revendications 1 à 11.

## Patentansprüche

1. Flugzeugcockpit, das einen ersten Sitz, der für einen Piloten bestimmt ist, einen zweiten Sitz, der für einen Copiloten bestimmt ist, mindestens eine erste Anzeigevorrichtung, die einen ersten Bildschirm (10) aufweist, der sich vor dem ersten Sitz befindet, mindestens eine zweite Anzeigevorrichtung, die einen zweiten Bildschirm (10) aufweist, der sich vor dem zweiten Sitz befindet, und eine Cockpitscheibe umfasst,
**dadurch gekennzeichnet, dass** es außerdem eine dritte Anzeigevorrichtung umfasst, die einen dritten mobilen Bildschirm (28) und einen Träger aufweist, der es dem dritten Bildschirm (28) ermöglicht, dass er von einer ersten Position, ausgefahren genannt, zu einer eingefahren genannten Position bewegt wird, dadurch, dass sich der dritte Bildschirm (28) in der ausgefahrenen Position über dem ersten Bildschirm (10) und dem zweiten Bildschirm (10) dergestalt befindet, dass er gleichzeitig für eine Person, die auf dem ersten Sitz sitzt, und für eine Person sichtbar ist, die auf dem zweiten Sitz sitzt, und einen Teil der Cockpitscheibe gleichzeitig für eine Person, die auf dem ersten Sitz sitzt, und für eine Person verdeckt, die auf dem zweiten Sitz sitzt, und dadurch, dass der dritte Bildschirm (28) in der eingefahrenen Position im Verhältnis zu seiner ausgefahrenen Position dergestalt abgesenkt ist, dass der Teil der Cockpitscheibe, der in der ausgefahrenen Position verdeckt ist, für eine Person, die auf dem ersten Sitz sitzt, und eine Person, die auf dem zweiten Sitz sitzt, mindestens teilweise sichtbar gemacht wird.

2. Flugzeugcockpit nach Anspruch 1, **dadurch gekennzeichnet, dass** der dritte Bildschirm (28) in seiner ausgefahrenen Position in dem Cockpit in einer zentralen Position angeordnet ist, und dadurch, dass der dritte Bildschirm (28) in seiner eingefahrenen Position für einen Betrachter, der in dem ersten Sitz oder dem zweiten Sitz Platz genommen hat, teilweise hinter dem ersten Bildschirm (10) und teilweise hinter dem zweiten Bildschirm (10) angeordnet ist.

3. Flugzeugcockpit nach irgendeinem der Ansprüche 1 oder 2, **dadurch gekennzeichnet, dass** mindestens die erste Anzeigevorrichtung, die einen ersten Bildschirm (10) umfasst, außerdem einen Träger umfasst, und dadurch, dass der Bildschirm (10) auf seinem Träger um eine erste im Wesentlichen horizontale Achse (16) schwenkbar montiert ist, und dadurch, dass der Träger Mittel (12) umfasst, die eine Höhenregelung des Bildschirms (10) ermöglichen.

4. Flugzeugcockpit nach Anspruch 3, **dadurch gekennzeichnet, dass** der Träger eine zweite feststehende, im Wesentlichen horizontale Achse (14) und mindestens einen Arm (12) umfasst, der ein erstes Ende, das schwenkbar an der ersten Achse (16) montiert ist, und ein zweites Ende aufweist, das die zweite feststehende Achse (14) trägt.

5. Flugzeugcockpit nach irgendeinem der Ansprüche 1 bis 4, **dadurch gekennzeichnet, dass** es außerdem eine Abdeckung (46) umfasst, welche die erste Anzeigevorrichtung und die zweite Anzeigevorrichtung überdeckt, dadurch, dass der dritte Bildschirm (28) sich in seiner ausgefahrenen Position über der Abdeckung (46) befindet, dadurch, dass sich der dritte Bildschirm (28) in seiner eingefahrenen Position unter der Abdeckung (46) befindet, und dadurch, dass eine Durchgangsöffnung in der Abdeckung (46) hergestellt ist, um dem dritten Bildschirm (28) den Durchgang zu erlauben, wenn er aus seiner ausgefahrenen Position in seine eingefahrene Position oder umgekehrt bewegt wird.

6. Flugzeugcockpit nach Anspruch 5, **dadurch gekennzeichnet, dass** die Abdeckung (46) einen zentralen Teil (48) und zwei seitliche Teile (50) umfasst, und dadurch, dass jeder seitliche Teil (50) einerseits Stoff und andererseits Mittel zum Spannen umfasst, um den Stoff zu halten.

7. Flugzeugcockpit nach Anspruch 6, **dadurch gekennzeichnet, dass** der zentrale Teil (48) ein starres Teil ist und teilweise als Konstruktion zum Halten von jedem Stoff der seitlichen Teile (50) dient.

8. Flugzeugcockpit nach irgendeinem der Ansprüche 1 bis 7, **dadurch gekennzeichnet, dass** es eine Instrumententafel umfasst, in die mindestens der erste Anzeigebildschirm (10) integriert ist, und dadurch, dass ein Kabelschrank vor dem Anzeigebildschirm angeordnet ist.

9. Flugzeugcockpit nach Anspruch 8, **dadurch gekennzeichnet, dass** ein im Wesentlichen ebener Träger (72) den Kabelschrank trägt, dadurch, dass eine elektronische Platine, Hauptplatine (68) genannt, sich im Wesentlichen senkrecht zu dem Träger (72) erstreckt und elektronische Platinen, Tochterplatinen (70) genannt, aufnimmt, die sich so erstrecken, dass sie gleichzeitig senkrecht zu der Hauptplatine (68) und zu dem Träger (72) verlaufen.

10. Flugzeugcockpit nach Anspruch 8 oder Anspruch 9, **dadurch gekennzeichnet, dass** der Träger (72) des Kabelschranks dergestalt ausgestaltet ist, dass er eine Eingabetastatur tragen kann.

11. Flugzeugcockpit nach einem der Ansprüche 8 bis 10, **dadurch gekennzeichnet, dass** ein Träger (72) der Elektronik eine obere Seite und eine untere Seite umfasst, und dadurch, dass die obere Seite die Elektronik aufnimmt, und dadurch, dass die untere Seite ausgestaltet ist, um mindestens ein Steuerpedal zu tragen.

12. Flugzeug, **dadurch gekennzeichnet, dass** es ein Cockpit nach einem der Ansprüche 1 bis 11 umfasst.

## Claims

1. An aircraft cockpit comprising a first seat intended to accommodate a pilot, a second seat intended to accommodate a co-pilot, at least one first display device comprising a first screen (10) facing the first seat, at least one second display device comprising a second screen (10) facing the second seat, and a windscreen,
further comprising a third display device having a third, mobile, screen (28) and a support allowing the third screen (28) to be displaced from a first position known as a deployed position to a position known as a retracted position, wherein in the deployed position the third screen (28) is above the first screen (10) and the second screen (10) so as to be visible both for a person seated on the first seat and for a person seated on the second seat and obscures a portion of the windscreen both for a person seated on the first seat and a person seated on the second seat, and wherein in the retracted position the third screen (28) is lowered with respect to its deployed position so as to at least partially make the portion of the windscreen obscured in the deployed position visible for a person seated on the first seat and for a person seated on the second seat.

2. The aircraft cockpit according to claim 1, wherein the third screen (28) in its deployed position is placed in a central position in the cockpit, and wherein in the retracted position the third screen (28) is placed partially behind the first screen (10) and partially behind the second screen (10) for an observer positioned on the first seat or the second seat.

3. The aircraft cockpit according to either of claims 1 and 2, wherein at least the first display device comprising a first screen (10) further comprises a support, and wherein the screen (10) is mounted on its support rotatable about a first, substantially horizontal pin (16), and wherein the support comprises means (12) providing height adjustment of the screen (10).

4. The aircraft cockpit according to claim 3, wherein the support comprises a second, substantially horizontal, fixed pin (14) and at least one arm (12) having a first end rotatably mounted on the first pin (16) and a second end bearing the second, fixed pin (14).

5. The aircraft cockpit according to any one of claims 1 to 4, further comprising a glare shield (46) covering the first display device and the second display device, wherein the third screen (28) in its deployed position is above the glare shield (46), wherein the third screen (28) in its retracted position is below the glare shield (46), and wherein a through opening is made in the glare shield (46) to allow the third screen (28) to pass through when it passes from its deployed position to its retracted position or vice versa.

6. The aircraft cockpit according to claim 5, wherein the glare shield (46) comprises a central portion (48) and two lateral portions (50), and wherein each lateral portion (50) comprises, on the one hand, a fabric and, on the other hand, tensioning means for holding said fabric.

7. The aircraft cockpit according to claim 6, wherein the central portion (48) is a stiff portion and serves partially structurally for holding each piece of fabric of the lateral portions (50).

8. The aircraft cockpit according to any one of claims 1 to 7, comprising an instrument panel incorporating at least the first display screen (10), and wherein an avionics unit is placed forward of the display screen.

9. The aircraft cockpit according to claim 8, wherein a substantially planar support (72) bears the avionics unit, and wherein an electronic board, known as the motherboard (68), extends substantially perpendicularly to the support (72) and receives electronic boards, known as daughterboards (70), which extend perpendicular both to the motherboard (68) and to the support (72).

10. The aircraft cockpit according to claim 8 or claim 9, wherein a support (72) of the avionics unit is shaped so as to be able to support an input keyboard.

11. The aircraft cockpit according to one of claims 8 to 10, wherein a support (72) of the electronic equipment comprises an upper face and a lower face, wherein the upper face receives said electronic equipment, and wherein the lower face is shaped to support at least one rudder bar.

12. An aircraft comprising a cockpit according to one of claims 1 to 11.
